Europäisches Patentamt

European Patent Office

Office européen des brevets

(19)

(11) Veröffentlichungsnummer: **0 067 434**
A2

# (12) EUROPÄISCHE PATENTANMELDUNG

(21) Anmeldenummer: 82105159.6

(22) Anmeldetag: 12.06.82

(51) Int. Cl.³: **B 60 K 15/08**

(30) Priorität: 16.06.81 DE 3123932

(43) Veröffentlichungstag der Anmeldung:
22.12.82 Patentblatt 82/51

(84) Benannte Vertragsstaaten:
AT BE CH DE FR GB IT LI LU NL

(71) Anmelder: Zühlke, Günther
Bielefelder Strasse 142
D-4840 Rheda-Wiedenbrück(DE)

(72) Erfinder: Zühlke, Günther
Bielefelder Strasse 142
D-4840 Rheda-Wiedenbrück(DE)

(74) Vertreter: Meyer, Alfred, Dipl.-Ing. Dr. jur.
Schwanenmarkt 10
D-4000 Düsseldorf 1(DE)

(54) Vorrichtung zum Abstützen eines Gastanks im Lade- oder Kofferraum eines Kraftfahrzeuges.

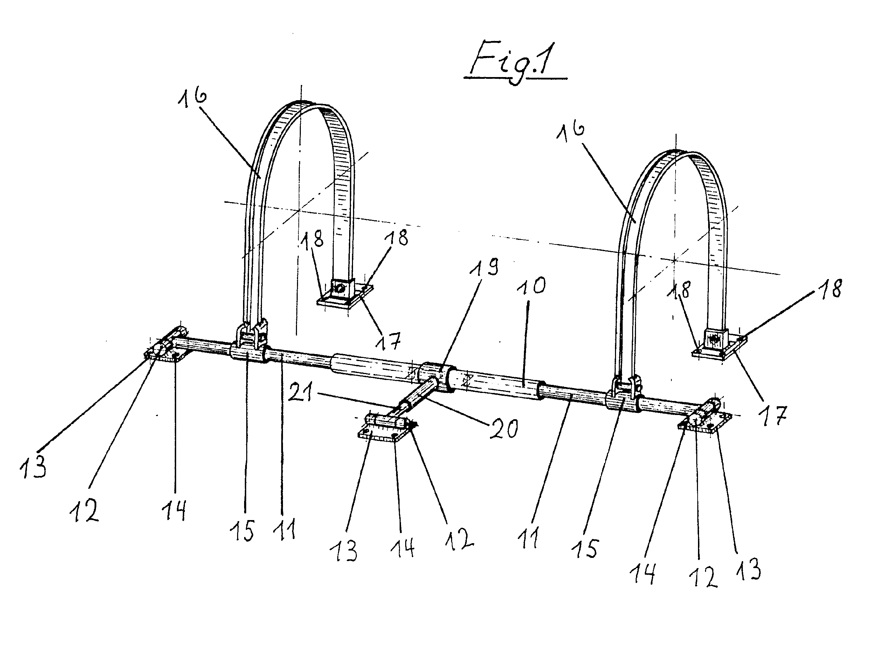

(57) Die Erfindung betrifft eine Vorrichtung zum Abstützen eines Gastanks im Lade- oder Kofferraum eines Kraftfahrzeuges. Diese Vorrichtung soll sich einfach montieren lassen und durch eine ausreichende Anpaßbarkeit zum Einbau in Lade- und Kofferräume unterschiedlicher Form und Größe sowie für Gastanks unterschiedlicher Form bzw. Größe geeignet sein. Deshalb ist eine derartige Vorrichtung erfindungsgemäß so ausgebildet, daß eine zumindest angenähert parallel zu einer Wand des Lade- oder Kofferraumes verlaufende Strebe in einen Mittelteil und zwei teleskopartig mit diesem versteckbare Endteile unterteilt ist, deren freie Enden jeweils mit einer Befestigungsplatte gelenkig verbunden sind, und daß der Gastank mittels an der Strebe angreifender Schellen gehalten ist (Figur 1).

EP 0 067 434 A2

Vorrichtung zum Abstützen eines Gastanks

im Lade- oder Kofferraum eines Kraftfahrzeuges

Die Erfindung betrifft eine Vorrichtung zum Abstützen eines Gastanks im Lade- oder Kofferraum eines Kraftfahrzeuges.

Wenn ein Kraftfahrzeug auf die Verwendung von Treibgas umgestellt wird, ist es meist unumgänglich, einen mit Treibgas gefüllten Behälter bzw. Tank an einer geeigneten Stelle des Kraftfahrzeuges anzuordnen. Die Befestigung des Behälters erfolgt meist nur in verhältnismässig provisorischer Form.

Bei Unfällen, insbesondere auch bei Auffahrunfällen, besteht die Gefahr, daß die Befestigung des Gastanks reißt oder sich löst und daß zumindest im Anschlußbereich des Gastanks Beschädigungen auftreten. Es ist auch nicht in allen Fällen auszuschließen, daß Treibgas ausströmt und zu brennen beginnt.

Aus diesen Gründen wäre es zweckmässig, den Gastank so stabil wie möglich befestigen zu können. Dies unterbleibt jedoch im allgemeinen deshalb, weil es noch keine hierfür geeignete Vorrichtungen gibt, mit denen sich ein Gastank in einfacher Weise in Lade- oder Kofferräumen unterschiedlicher Form und Größe befestigen läßt.

Es war deshalb Aufgabe der Erfindung, eine zum Befestigen eines Gastanks geeignete Vorrichtung zu schaffen, die in ihrem Aufbau einfach ist und sich leicht in Lade- und Kofferräume beliebiger Form und Größe einsetzen läßt.

Eine derartige Vorrichtung soll erfindungsgemäß so ausge-

- 2 -

bildet werden, daß eine zumindest angenähert parallel
zu einer Wand des Lade- oder Kofferraumes verlaufende
Strebe in einen Mittelteil und zwei teleskopartig mit
diesem versteckbare Endteile unterteilt ist, deren
freie Enden jeweils mit einer Befestigungsplatte gelenkig verbunden sind, und daß der Gastank mittels an der
Strebe angreifender Schellen gehalten ist.

Da die Länge der Strebe veränderlich ist, läßt sie sich
leicht an die jeweiligen Einbaugegebenheiten, z.B. auch
an die Breite eines Kofferraumes, anpassen, so daß eine
Befestigung der Endteile der Strebe ohne Schwierigkeiten
möglich ist. Aufgrund der gelenkigen Verbindung der Befestigungsplatten mit jeweils einem Endteil ist es auch
möglich, die Lage der Befestigungsplatte an die Form oder
Lage der jeweiligen Wand oder des Bodens des Lade- oder
Kofferraumes anzupassen. Im allgemeinen wird man den
Gastank in unmittelbarer Nähe mindestens einer Wand des
Lade- oder Kofferraumes anordnen, während die Vorrichtung
den Gastank gegenüber der Freifläche des jeweiligen Lade-
oder Kofferraumes abstützt. Damit ist die Gefahr eines
Losreißens des Gaßtanks und einer Beschädigung zumindest
im Anschlußbereich unterbunden. Wenn der Gastank z.B.
in unmittelbarer Nähe der Rückwand des Kofferraums angeordnet ist und sich die Strebe in Querrichtung des Kraftfahrzeuges erstreckt, wird der Gastank auch dann noch
sicher abgestützt, wenn bei einem Auffahrunfall Relativgeschwindigkeiten bis zu 50 km/h auftreten.

Ferner ist die nach der Erfindung ausgebildete Vorrichtung
einfach und billig herzustellen und sehr leicht zu montieren.

- 3 -

Der Mittelteil und die Endteile der Strebe können zwar grundsätzlich einen beliebigen Querschnitt haben. Besonders vorteilhaft ist es jedoch, wenn diese Teile zumindest in ihrem teleskopartig zusammenwirkenden Bereich einen runden Querschnitt haben und gegeneinander drehbar sind und daß die Befestigungsplatte mit dem freien Ende eines Endteils jeweils durch ein einachsiges Gelenk verbunden ist.

Wenn bei einer derartigen Ausführungsform eine relative Drehbarkeit zwischen den Endteilen einerseits und dem Mittelteil andererseits gewährleistet ist, ergibt sich für die Befestigungsplatte immer noch eine so große Zahl von Positionsmöglichkeiten, daß eine einachsiges Gelenk wie zum Beispiel ein Scharnier ausreichend ist und nicht etwa ein Kugelgelenk verwendet werden muß, um allen denkbaren Einbaupositionen Rechnung zu tragen.

Die Strebe wird erfindungsgemäß vorteilhaft so ausgebildet, daß die Endteile in den Mittelteil eingesteckt sind und daß die Schellen jeweils an einer Hülse angreifen, die verschiebbar auf ein Endteil aufgesetzt ist. Für eine möglichst wirkungsvolle Befestigung des Gastanks ist es günstig, wenn zwei Schellen möglichst jeweils in der Nähe der beiden Seiten des Gastanks um diesen herumgeführt sind. Da es jedoch Gastanktypen von unterschiedlicher Länge gibt, läßt sich eine Anpassung an die Länge der jeweiligen Gastanks durch einfaches Verschieben der Hülsen auf dem Endteil erreichen. Im übrigen ist es auch günstig, daß die Schellen hierbei möglichst nahe an den Befestigungsplatten an den jeweiligen Endteil angreifen, so daß die auf diesen ausgeübte Momentenbelastung möglichst gering ist.

- 4 -

Es ist zwar grundsätzlich denkbar, daß die Schellen den
Gastank vollständig umgehen und mit beiden Enden an der
Strebe angreifen. Wesentlich günstiger ist es jedoch,
wenn jeweils ein Ende einer Schelle mittels einer weiteren
Befestigungsplatte am Boden oder einer Wand des Lade-
oder Kofferraumes befestigt ist. Da die Schellen ausreichend biegsam sind, ist die Montage dieser Befestigungsplatten nicht schwierig.

Wenn der zu verwendende Gastank besonders groß ist,
oder ein besonders großes Gewicht hat, kann die Vorrichtung erfindungsgemäß so ausgerichtet sein, daß an
der Strebe mindestens eine Stütze angreift, die sich
mit ihrem anderen Ende am Boden des Lade- oder Kofferraumes abstützt. Im allgemeinen wird eine Stütze ausreichen, die dann etwa auf halber Länge der Strebe an
dieser angreift. Hierbei kann dieses Ende der Stütze
vorteilhaft mit einer Muffe versehen sein, die auf den
Mittelteil verschiebbar aufgesetzt ist, wobei das andere
Ende der Stütze mit einer Befestigungsplatte gelenkig
verbunden ist. Somit ist auch die Stütze an die jeweiligen Einbauverhältnisse gut anpaßbar. Gegebenenfalls
kann diese Anpaßbarkeit weiter dadurch verbessert werden,
daß die Stütze aus mindestens zwei teleskopartig miteinander versteckten Teilen gebildet ist.

Im übrigen ist es denkbar, die teleskopartig miteinander
versteckten Teile zumindest teilweise durch Schrauben,
Stifte oder Klemmen gegeneinander zu arretieren.

Nachfolgend wird eine bevorzugte Ausführungsform der
Erfindung anhand einer Zeichnung näher beschrieben. Im
einzelnen zeigen:

Figur 1 die Vorrichtung in perspektivischer
         Darstellung:

Figur 2 in schematischer Darstellung einen in einem
         Kofferraum eingebauten Gastank in Seitenansicht;

Figur 3 eine Draufsicht auf die Darstellung nach
         Figur 2;

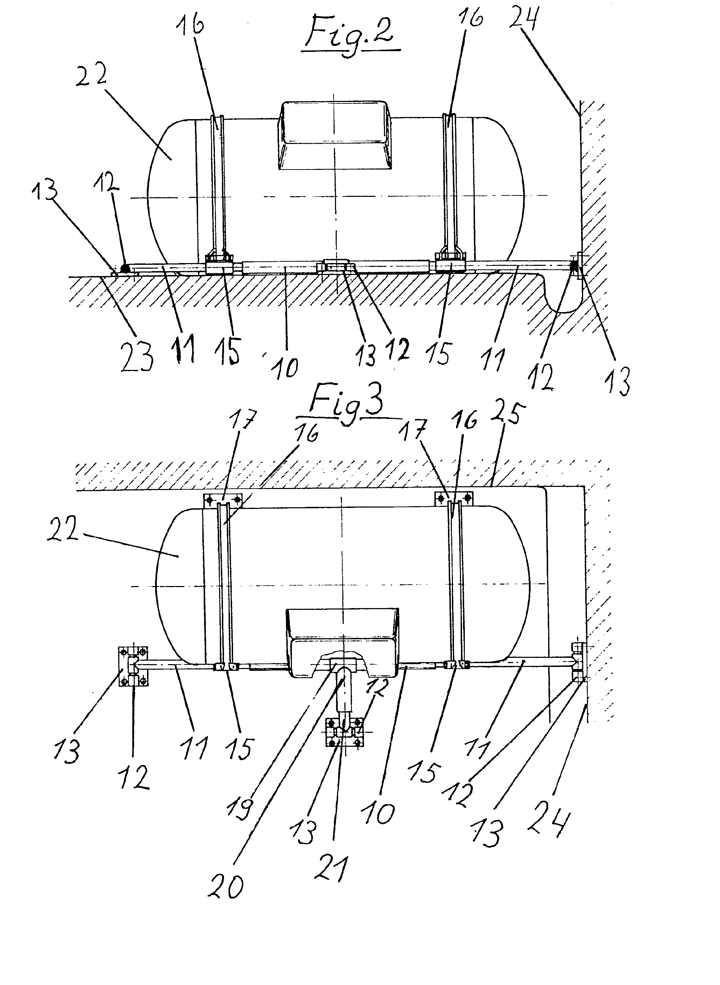

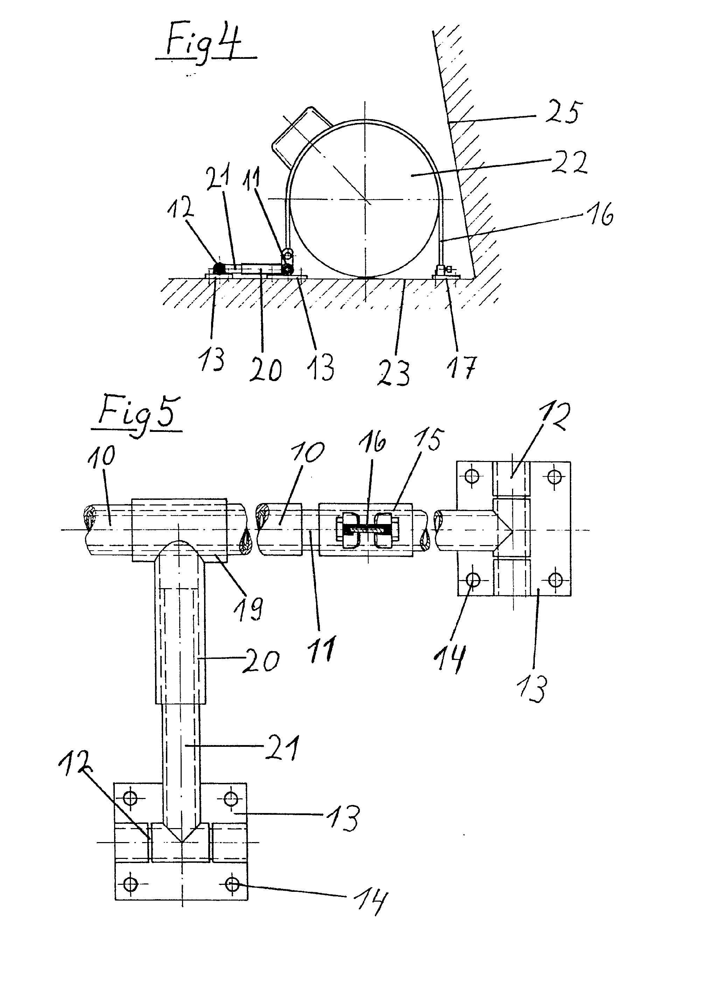

Figur 4 eine zu der Darstellung nach Figur 2 um
         90° gedrehte Ansicht des eingebauten Gastanks;

Figur 5 in vergrößertem Maßstab als Draufsicht einen
         Teil der Vorrichtung.


Die Strebe der Vorrichtung unterteilt sich in einen
rohrförmigen Mittelteil 10 und zwei zu jeder Seite desselben teleskopartig einsteckbare Endteile 11 aus
massivem Material, jedoch ebenfalls mit kreisförmigem
Querschnitt. Die Endteile 11 haben an ihren freien Enden
jeweils ein scharnierartig ausgebildetes, einachsiges
Gelenk 12 mit einer Befestigungsplatte 13, die mit
Schraublöchern 14 versehen ist.

Auf den Endteilen 11 ist jeweils eine Hülse 15 von
kreisförmigem Innenquerschnitt verschiebbar aufgesetzt.
An einer Hülse 15 ist jeweils ein Ende einer bandartigen
Schelle 16 befestigt. Das andere Ende der Schelle 16 ist
wiederum mit einer Befestigungsplatte 17 verbunden. Auch
diese ist mit Schraublöchern 18 versehen.

- 6 -

Auf den Mittelteil 10 ist eine Muffe 19 aufgeschoben,
an die ein rohrförmiger Teil 20 einer Stütze angeschweißt ist und der andere Teil derselben besteht aus
einem massiven Rundstahl 21, der mit dem rohrförmigen
Teil 20 teleskopartig zusammensteckbar ist. Auch an
dem freien Ende des Rundstahls 21 ist über ein Gelenk
12 eine Befestigungsplatte 13 angeordnet.

Die Figuren 2 bis 4 zeigen den Einbau eines Gastanks 22
in den Kofferraum eines Kraftfahrzeuges, dessen Boden 23,
Seitenwand 24 und Rückwand 25 hier nur schematisch
angedeutet sind. Die Schellen 16 sind mit ihrem einen
Ende über die Befestigungsplatten 17 mit dem Boden 23
des Kofferraums in unmittelbarer Nähe der Rückwand 25
verschraubt. Jeweils eines der Endteile 11 ist über
seine Befestigungsplatte 13 an der Seitenwand 24 des
Kofferraums verschraubt, während die Befestigungsplatte
13 des jeweils anderen Endteils 11 am Boden 23 befestigt ist. Aufgrund der Drehbarkeit der Endteile 11
in dem Mittelteil 10  und der durch das Gelenk 12 gegebenen Schwenkbarkeit der Befestigungsplatte 13 kann
diese in einer Vielzahl von Positionen im Kofferraum
montiert werden, denn die Befestigungsplatte 13 läßt
sich jeweils so einstellen, daß die betreffende Seitenwand 24 oder der Boden 23 durchaus nicht unbedingt
horizontal, vertikal oder eben zu verlaufen brauchen.
Auch kann sich der in den Figuren 2 und 3 linke Endteil
11 auch bis zu der hier nicht dargestellten linken
Seitenwand erstrecken, so daß die Befestigungsplatte 13
in derselben Lage montiert werden kann wie auf der
rechten Seite.

Da die Hülsen 15 auf den Endteilen 11 verschiebbar sind, lassen sich die Schellen 16 auch bei unterschiedlichen
Längen der jeweils zu montierenden Gastanks 22 immer in
eine solche Lage schieben, daß sie den jeweiligen Gastank 22 in der Nähe seiner Stirnflächen umgeben. Die aus
dem Mittelteil 10 um den Endteil 11 gebildete Strebe
wird zweckmäßig in der hier dargestellten Höhe unmittelbar über dem Boden 23 des Kofferraumes montiert, um den
Gastank 22 nach dem Öffnen der Schellen 16 ohne Demontage
der Strebe herausnehmen zu können. Die Schellen 16
können je nach Bedarf bandförmig elastisch ausgebildet
oder auch aus formsteifen Bügeln gebildet sein. Die Länge
der Schellen 16 wird dem jeweiligen Durchmesser des Gastanks 22 angepaßt.

In vielen Fällen wird die Verwendung einer aus der
Muffe 19, dem rohrförmigen Teil 20 und dem Rundstahl
21 bestehenden Stütze überhaupt nicht erforderlich sein.
Bei schweren Gastanks wird die Verwendung nur einer Stütze
genügen, wobei sich ein geeigneter Ort für die Befestigung
des Stützenendes in einem verhältnismäßig großen Bereich
wählen läßt, da die Muffe 19 in seitlicher Richtung verschoben werden kann und auch die Länge der Stütze veränderbar ist.

Wenn hier auch ein Einbau der Vorrichtung in einer quer zur
Kraftfahrzeuglängsachse verlaufenden Richtung beschrieben wurde,
so sind auch andere Einbaugegebenheiten denkbar, bei denen es
zweckmäßiger sein kann, den Gastank zumindest angenähert
parallel zu einer Seitenwand des Lade- oder Kofferraumes
anzuordnen, so daß sich dann auch die Strebe der Vorrichtung in eine zur Fahrzeuglängsachse zumindest angenähert
parallele Richtung erstreckt.

- 8 -

B e z u g s z i f f e r n l i s t e :

10 Mittelteil

11 Endteil

12 Gelenk

13 Befestigungsplatte

14 Schraubloch

15 Hülse

16 Schelle

17 Befestigungsplatte

18 Schraubloch

19 Muffe

20 Teil

21 Rundstahl

22 Gastank

23 Boden

24 Seitenwand

25 Rückwand

Dipl.-Ing. Dr. jur. Alfred W. Meyer
Patentanwalt

4 Düsseldorf 1, 11.6.

**0067434**

Kreuzstraße 32
Telefon (0211) 32 59 64
Telegramme Meypat

Neue Anschrift u. Tel. Nr.
Schwanenmarkt 18 — Telefon 32 60 t
4000 Düsseldorf 1

Mein Zeichen 7129 A 1

Aktenzeichen.

Anmelder.  Günther Zühlke
Bielefelder Str. 142, 4840 Rheda-Wiedenbrück

A n s p r ü c h e :

1. Vorrichtung zum Abstützen eines Gastanks im Lade- oder
Kofferraum eines Kraftfahrzeuges, dadurch gekennzeichnet, daß eine zumindest angenähert parallel zu einer
Wand des Lade- oder Kofferraumes verlaufende Strebe
in einen Mittelteil (107) und zwei teleskopartig mit
diesem versteckbare Endteile (11) unterteilt ist, deren
freie Enden jeweils mit einer Befestigungsplatte (13)
gelenkig verbunden sind, und daß der Gastank (22)
mittels an der Strebe (10,11) angreifender Schellen
(16) gehalten ist.

2. Vorrichtung nach Anspruch 1, dadurch gekennzeichnet, daß
der Mittelteil (1o) und die Endteile (11) zumindest in
ihrem teleskopartig zusammenwirkenden Bereich einen runden
Querschnitt haben und gegeneinander drehbar sind und daß
die Befestigungsplatte (13) mit dem freien Ende eines
Endteils (11) jeweils durch ein einachsiges Gelenk (12)
verbunden ist.

3. Vorrichtung nach Anspruch 2, dadurch gekennzeichnet, daß
die Endteile (11) in den Mittelteil (10) eingesteckt sind

- 2 -

und daß die Schellen (16) jeweils an einer Hülse
(15) angreifen, die verschiebbar auf ein Endteil
(11) aufgesetzt ist.

4. Vorrichtung nach Anspruch 3, dadurch gekennzeichnet,
   daß das jeweils andere Ende einer Schelle (16) mittels
   einer Befestigungsplatte (17) am Boden (23) oder der
   Rückwand (25) des Kofferraumes befestigt ist.

5. Vorrichtung nach einem der vorherigen Ansprüche, dadurch gekennzeichnet, daß an der Strebe (10,11)
   mindestens eine Stütze (19,20,21) angreift, die
   sich mit ihrem anderen Ende am Boden (23) des Lade-
   oder Kofferraumes abstützt.

6. Vorrichtung nach Anspruch 5, dadurch gekennzeichnet,
   daß das an der Strebe angreifende Ende der Stütze
   mit einer Muffe (19) versehen ist, die auf dem
   Mittelteil (10) der Strebe verschiebbar aufgesetzt
   ist, und daß das andere Ende der Stütze mit einer
   Befestigungsplatte (13) gelenkig verbunden ist.

7. Vorrichtung nach Anspruch 6, dadurch gekennzeichnet,
   daß die Stütze aus mindestens zwei teleskopartig
   miteinander versteckbaren Teilen (20,21) gebildet ist.

8. Vorrichtung nach einem der vorherigen Ansprüche, dadurch
   gekennzeichnet, daß die teleskopartig miteinander versteckten Teile (10,11;20,21) durch Schrauben, Stifte
   oder Klemmen gegeneinander arretierbar sind.

0067434

Fig.1

0067434

Fig.2

Fig.3

0067434

Fig4

Fig5